(19) Europäisches Patentamt / European Patent Office / Office européen des brevets

(11) **EP 3 268 139 B1**

(12) **EUROPEAN PATENT SPECIFICATION**

(45) Date of publication and mention
of the grant of the patent:
**18.12.2024 Bulletin 2024/51**

(21) Application number: **16761149.0**

(22) Date of filing: **10.03.2016**

(51) International Patent Classification (IPC):
**B08B 9/045** (2006.01)   **B08B 9/047** (2006.01)
**B08B 9/027** (2006.01)   **B08B 1/00** (2024.01)
**A46B 13/02** (2006.01)   **A46B 5/00** (2006.01)

(52) Cooperative Patent Classification (CPC):
**A46B 13/02; A46B 5/0037; B08B 1/34;
B08B 9/045;** A46B 2200/3013

(86) International application number:
**PCT/FI2016/050146**

(87) International publication number:
**WO 2016/142586 (15.09.2016 Gazette 2016/37)**

(54) **FLEXIBLE TORSION SHAFT, ARRANGEMENT AND DEVICE FOR CLEANING AIR-CONDITIONING DUCTS**

FLEXIBLE TORSIONSWELLE, ANORDNUNG UND VORRICHTUNG ZUR REINIGUNG VON KLIMAKANÄLEN

ARBRE DE TORSION SOUPLE, AGENCEMENT ET DISPOSITIF POUR LE NETTOYAGE DE CONDUITS DE CONDITIONNEMENT D'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.03.2015 FI 20155157
15.01.2016 FI 20165025**

(43) Date of publication of application:
**17.01.2018 Bulletin 2018/03**

(73) Proprietor: **Bierkühl OY
50600 Mikkeli (FI)**

(72) Inventor: **HILTUNEN, Pentti
50600 Mikkeli (FI)**

(74) Representative: **Kespat Oy
Vasarakatu 1
40320 Jyväskylä (FI)**

(56) References cited:
**EP-A1- 0 806 219      EP-A1- 0 806 219
EP-A1- 0 972 154      EP-A2- 0 358 117
FI-B- 123 198          FI-B- 123 198
US-A- 2 573 361       US-A- 5 265 911
US-A- 5 816 923       US-A1- 2008 229 527
US-A1- 2008 229 527   US-A1- 2009 083 915
US-A1- 2009 083 915   US-A1- 2014 123 529
US-A1- 2014 123 529   US-A1- 2014 123 529**

**Description**

The present invention relates an arrangement in connection with a flexible torsion shaft, which arrangement includes a casing tube fitted to a flexible torsion shaft, which is intended to be attached to a drive shaft, defined in Claim 1. A cleaning device for air-conditioning ducts is one particular embodiment.

The flexible shaft according to the invention is suitable for transmitting a torsion force in many applications, particularly when used inside a casing tube. In this case, particularly an air-conditioning cleaning device is disclosed, which is known from, among others, Finnish patents 94221 and 108408 and from utility model 9567. In the device for cleaning air-conditioning ducts, a flexible shaft is used to rotate a cleaning brush. The brush device used in the solution comprises a motor-driven brush, which is supported on the wall of the duct with the aid of a carrier brush. The flexible operating arm comprises a casing tube and a braided steel cable fitted inside it. The flexible shaft is rigidly attached from the casing tube to the body of the drive motor. The drive shaft is rigidly joined to the shaft of the motor, so that torque is efficiently transmitted in the long, flexible shaft to the brush head. During cleaning, the brush head is operated in both directions.

Such a steel cable is wound to either the right or the left. Due to this, its torque-transmitting capability is not symmetrical. A second drawback with this known solution is that the steel cable is heavy, the total weight of the reel rising to as many as several tens of kilogrammes.

US 2 573 361 A discloses torsion transmitting and torsion resisting shafts which can be employed for a variety of applications in which a shaft is used to transmit torsional power.

The present invention is intended to eliminate the said drawbacks and create an improved device for cleaning air-conditioning ducts.

An arrangement according to the invention is defined in Claim 1. The particular arrangement for cleaning air-conditioning ducts is in Claim 3.

The advantage of the solution according to the invention is that the cross-braided composite cable has symmetrical torque properties. It is also lighter than a steel cable. Due to these advantages, the torsion shaft, and through it the entire cleaning device is more user-friendly.

The body of the torsion shaft is preferably epoxy and the reinforcing fibres are mainly glass fibre. Polyamide (Nylon®), aramid (Kevlar®), UHMWPE (Dyneema®), and carbon fibre are also suitable for this purpose. The flexible torsion shaft is preferably manufactured by means of pultrusion, in which filament fibres are wound around a preform. Some type of standard filament winder machine can be used. The fibres to be wound around the core wire are soaked in resin and a layer of a chosen thickness is hardened in an oven. The machine winds each layer in two directions, so that by pulling backwards and forwards the winding angles are in opposite directions and the torsion shaft naturally gains symmetrical properties.

According to the invention, several layers are wound around a core wire, at different winding angles, in order to achieve the desired strength and stiffness properties. The main rule is that the outer layers are wound at a steeper angle relative to the core wire. The weight of the fibres is 50 - 75 % of the total weight.

The casing tube is preferably of polyamide, when the material hardness and other properties will minimize friction.

The diameter of the flexible torsion shaft is 2 - 16 mm, preferably 6 - 12 mm. The diameter of the core (wire, cable, or braided cord or rubber, e.g. EPDM) is arranged in such a way that the total thickness of the casing layer is at most 5 mm, preferably at most 3.5 mm.

In brush cleaning devices and in other uses, the minimum radius of curvature of the flexible torsion shaft (12) is 30 - 200 cm, preferably 50 - 100 cm.

In the following, the invention is described in greater detail with the aid of an embodiment example with reference to the accompanying drawings, in which

Figure 1 shows a schematic side view of the construction of the flexible shaft
Figure 2 shows an axonometric view of the shaft of Figure 1
Figure 3 shows a cross-section of the shaft of Figure 1
Figure 4 shows a drill/screwdriver equipped with the flexible shaft
Figure 5 shows the construction of the multi-layer torsion shaft in partial cross-section
Figure 6 shows a cross-section of the shaft of Figure 5
Figure 7 shows one brush cleaning device.

The components of the flexible shaft arrangement 10 are a casing tube 14 and the torsion shaft 12 itself. The length of the shaft arrangement can be 2 - 40 m and the diameter of the torsion shaft 12 is 2 - 16 mm.

The casing tube 14 is typically of polyamide and its task is to protect structures by keeping the rotating torsion shaft 12 away from, e.g. the duct structures. Polyamide gives a low coefficient of friction with most of the polymers binding the reinforcing fibres, such as epoxy.

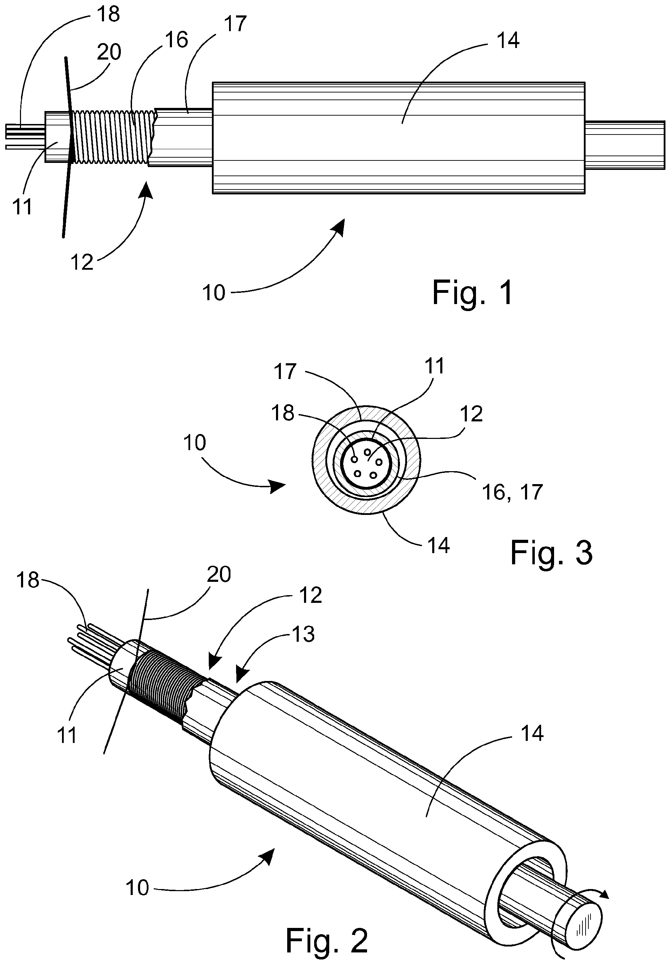

The body of the torsion shaft 12 of Figure 1 is epoxy and filament wires 20, generally of glass fibre, are wound on top of it in two directions. The core is a bunch of fibres 18 and a polyethylene membrane 11 is on top of it.

In terms of torsional stiffness, the winding angle of the filament wires 20 is crucial. In the figures, the winding angle is in the order of 75°. Preferably it is 60 - 85°. A low winding angle makes the torsion shaft stiff, so that the curvature radius remains large. A large winding angle gives good torsional stiffness. Several layers can be wound at different winding angles, in order to achieve the desired strength and stiffness properties. The main rule is that the outermost layers are always wound at a steeper angle relative to the core wire. The weight of the fibres is 50 - 70 % of the total weight.

The axial filaments 18, which are important to the tensile strength of the shaft, are marked in the figures.

The diameter of the flexible torsion shaft is 2 - 16 mm, preferably 6 - 12 mm. The length of such shafts is in the range 2 - 40 m. The nominal torque M is in the range 2 - 30 Nm and the torsional shaft's diameter D is then in the range

$$D = 2.2 \text{ mm} \times \sqrt{(M/Nm)} \pm 30\%$$

Typical values:

Length 2 m, diameter 3 mm, nominal torque 2 Nm
Length 30 m, diameter 8 - 12 mm, nominal torque 10 - 30 Nm.

It is important to adjust the material hardness of the casing tube, because it determined the magnitude of the friction.

In one embodiment, the core, i.e. the core wire, is a nylon cord, on top of which epoxy is cast and glass-fibre filaments are wound on the surface. It is important to isolate the fibre bunch, fabric cord, or braided rubber twine used as the core, from the winding fibre so that the epoxy is not absorbed in the core . Either absorption with oil, or a suitable membrane such as polyethylene can be used, for this isolation.

A more highly-developed embodiment than the above uses multi-layer reinforcing fibre winding and at least two different polymer layers, of which the inner one is hard and the outer one of a more elastic polymer. One such polymer pair is Axson tech. (FR) EPOLAM 2040 (hard epoxy) and EPOLAM 8064R (flexible epoxy). Generally, a layer thickness of less than 2 mm does not require a second polymer. The thickness of the casing layer is usually at most 5 mm, preferably at most 3.5 mm. Experience has shown that a layer thickness of more than 3.5 mm is generally of no benefit, because then the torsion shaft loses its elasticity. In the surface layer, polyurethane can be used, the elasticity of which is many times that of the elastic epoxy referred to above. The same manufacturer's polyurethane resins are 'RE11550 polyol' and 'RE1020- isocyanate', a mixture of which has an elongation value of 230 %. In addition to these, hybrid resins are available, in which different grades of resin, such as epoxy and urethane resins, are arranged together. The task of the core component is to prevent buckling in the casing component when bending the torsion shaft into a curve.

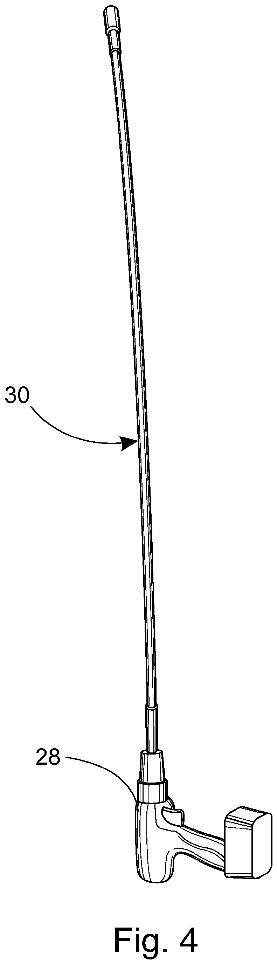

In Figure 4, a flexible shaft 30 about a metre in length, fitted into a casing tube, which is used to drive a cleaning brush or other tool, is attached to a drill 28. The embodiment of Figure 4 does not require a shaft that is as flexible as that above. A relatively rigid shaft is suitable for many purposes . The casing tube can be held by hand, or the body of the device being driven can hold it in place. The said winding angle can then be 45°, generally 40° - 60°.

The diameter of drill shafts can be 2 - 8 mm. For example, shafts with a diameter of 2 - 4 mm are suitable for opening drainpipes.

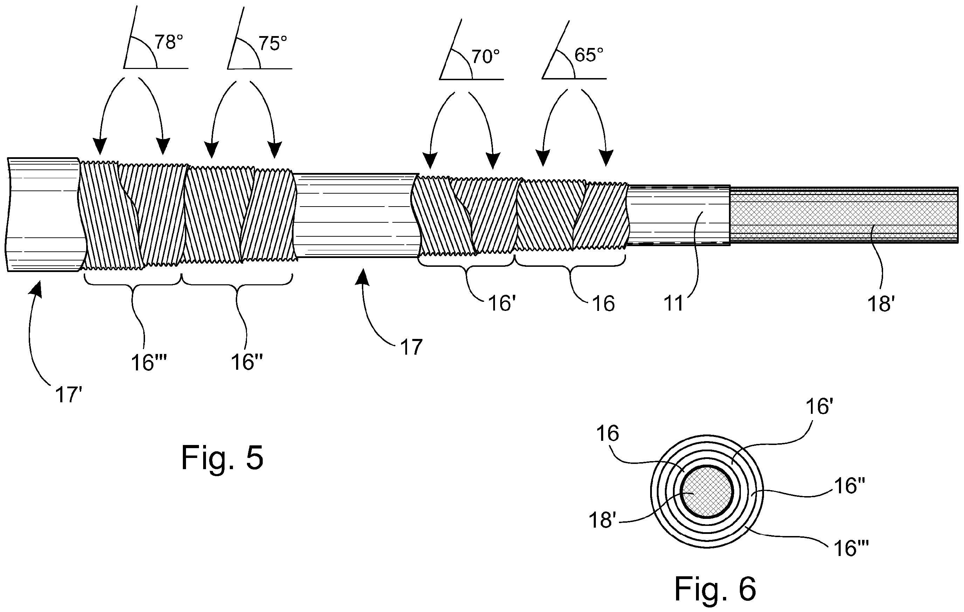

In latest embodiments, the core is a flexible, braided cord, by means of which the internal diameter of the polymer layer is increased in step with the external diameter. Thus, for example, in one torsion shaft with a diameter of 8 mm (Figures 5 and 6), the rubber core cord 18' (braided) has a diameter of 2 mm. On top of it is a thin (0.1 mm) polyethylene membrane 11 to prevent the absorption of epoxy resin. A first reinforcing-wire layer 16, with a thickness of 600 Tex (glass-fibre) at a winding angle of 65°, set at a low angle, comes first in the polymer layer 17 (thickness 1.5 mm). Layers of the same polymer follow on top of it at a steeper 70° angle, but alternating in different directions, layer 16' of glass-fibre, until a total thickness of 1.5 mm is achieved. A layer 16" of reinforcing-fibre comes into an elastic epoxy layer 17' (thickness 1.5 mm) at an increasingly steep angle (75°), until the last layer 16_ of 3-mm flat wire is hoop wound at about 78°. About 14 reinforcing-fibre layers are made with 0.2-mm wire (roving), by which a thickness of about 3 mm is achieved together with the epoxy resin.

Reinforcing fibres: glass-fibre, polyamide (Nylon[®]), aramid (Kevlar[®]), UHMWPE (Dyneema[®]), carbon fibre. Rovings to be used 100 - 600 Tex (glass-fibre bunches), in a circular fibre bunch, thickness 0.1 - 1 mm.

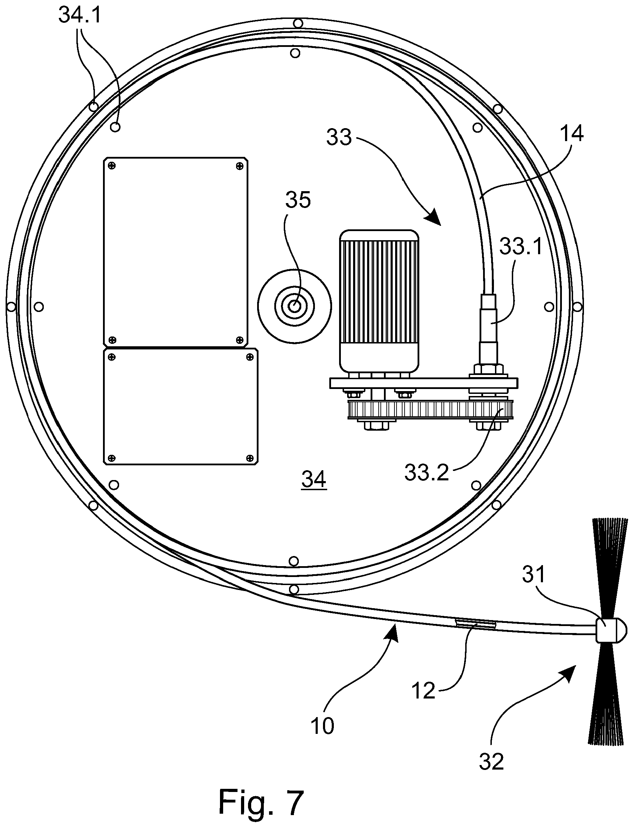

A particular application of the flexible torsion shaft is brushing cleaning devices for air-conditioning ducts, of which an example is the device according to utility model FI-U-9567, shown in Figure 7. The flexible torsion shaft according to the invention is suitable for nearly all machines designed for a corresponding task, in which the flexible torsion shaft together with the casing tube can be reeled onto a reel of a quite small diameter (60 - 120 cm). In the brush cleaning device according to Figure 7, a disc 34 is set to be rotated with the aid of a shaft 35. On the circumference of the disc 34 are pins 34.1, between which the flexible torsion shaft 10 with a casing tube is reeled. The brush device 31 is attached to the flexible shaft in the hub 32. The start of the casing tube 14 is permanently attached to the body of the motor assembly 33 and the torsion shaft 12 itself is attached to a rotating toothed-belt gearwheel 33.2. The rotating force generally comes through the shaft, but the construction of the rotation device is not within the scope of the present invention.

## Claims

1. Arrangement (10) in connection with a flexible torsion (12), which is intended to be attached to a drive shaft, the flexible torsion shaft (12) having a core wire (18) and a reinforcement comprising reinforcing-fibre wound around the core wire (18), the flexible torsion shaft (12) being composite comprising a polymeric base substance (17, 17') and a multi-layered (16, 16', 16", 16‴) reinforcing-fibre reinforcement wound at an angle of 45° - 85°, where each layer is wound alternate in opposite directions, and the outer layers are wound at a steeper angle relative to the core wire (18) than the inner layers, and the length of the flexible torsion shaft (12) is 1 - 40 m, **characterized in that** the arrangement (10) includes a casing tube (14) fitted to the flexible torsion shaft (12) and **in that** the diameter of the flexible torsion shaft (12) is 2 - 16 mm, preferably 6-12 mm, and the weight of the fibres is 50 - 75 % of the total weight, and the first layer of the reinforcing fibre is wound at an angle of 45° - 70°, and the minimum curvature radius of the flexible torsion shaft (12) is 30 - 200 cm, preferably 50 - 100 cm, wherein the nominal torque M is in the range 2 - 30 Nm.

2. Arrangement (10) according to Claim 1, **characterized in that** the casing tube (14) is of polyamide.

3. Device for cleaning air-conditioning ducts, which device includes reeling means (34, 34.1) for a flexible torsion shaft (12) fitted with a casing tube (14), drive-motor machinery (33) for rotating the flexible torsion shaft (12), and a brush device (32) attached to the free end of the flexible torsion shaft (12), **characterized in that** the flexible torsion shaft (12) and the casing tube (14) are the arrangement according to Claim 1 or 2.

## Patentansprüche

1. Anordnung (10) in Verbindung mit einer flexiblen Torsionswelle (12), die dazu bestimmt ist, an einer Antriebswelle angebracht zu sein, wobei die flexible Torsionswelle (12) einen Kerndraht (18) und eine Verstärkung aufweist, umfassend Verstärkungsfasern, die um den Kerndraht (18) gewickelt sind, wobei die flexible Torsionswelle (12) ein Verbundstoff ist, umfassend eine polymere Grundsubstanz (17, 17') und eine mehrschichtige (16, 16', 16", 16‴) Verstärkungsfaserverstärkung, die in einem Winkel von 45°- 85° gewickelt ist, wobei jede Schicht abwechselnd in entgegengesetzte Richtungen gewickelt ist und die äußeren Schichten in einem steileren Winkel relativ zum Kerndraht (18) gewickelt sind als die inneren Schichten, und die Länge der flexiblen Torsionswelle (12) 1-40 m ist, **dadurch gekennzeichnet, dass** die Anordnung (10) ein an der flexiblen Torsionswelle (12) angeschlossenes Gehäuserohr (14) einschließt und dass der Durchmesser der flexiblen Torsionswelle (12) 2-16 mm, vorzugsweise 6-12 mm ist, und das Gewicht der Fasern 50-75 % des Gesamtgewichts ist, und die erste Schicht der Verstärkungsfaser in einem Winkel von 45-70° gewickelt ist und der minimale Krümmungsradius der flexiblen Torsionswelle (12) 30-200 cm, vorzugsweise 50-100 cm ist, wobei das Nenndrehmoment M im Bereich von 2-30 Nm ist.

2. Anordnung (10) nach Anspruch 1, **dadurch gekennzeichnet, dass** das Gehäuserohr (14) aus Polyamid ist.

3. Vorrichtung zur Reinigunng von Klimakanälen, wobei die Vorrichtung Aufrollmittel (34, 34.1) für eine flexible Torsionswelle (12), an der ein Gehäuserohr (14) angeschlossen ist, Antriebsmotormaschinen (33) zum Drehen der flexiblen Torsionswelle (12) und eine am freien Ende der flexiblen Torsionswelle (12) angebrachte Bürstenvorrichtung (32) einschließt, **dadurch gekennzeichnet, dass** die flexible Torsionswelle (12) und das Gehäuserohr (14) die Anordnung nach Anspruch 1 oder 2 sind.

## Revendications

1. Agencement (10) en lien avec un arbre de torsion souple (12), lequel est destiné à être fixé à un arbre de transmission, l'arbre de torsion souple (12) ayant un fil de noyau (18) et un renforcement comprenant des fibres de renforcement enroulées autour du fil de noyau (18), l'arbre de torsion souple (12) étant en composite composé d'une substance à base polymérique (17, 17') et d'un renforcement en fibres de renforcement multi-couches (16, 16', 16", 16‴) enroulées à un angle dont la mesure est comprise entre 45° et 85°, dans lequel chaque couche est enroulée en alternance dans des directions opposées, et les couches externes sont enroulées à un angle plus aigu par rapport au fil de noyau (18) que les couches internes, et la longueur de l'arbre de torsion souple (12) est comprise entre 1 m et 40 m, **caractérisé en ce que** l'agencement (10) comprend un tube enveloppant (14) fixé à l'arbre de torsion souple (12) et **en ce que** le diamètre de l'arbre de torsion souple (12) est compris entre 2 mm et 16 mm, de préférence entre 6 mm et 12 mm, et le poids des fibres représente entre 50 % et 75 % du poids total, et la première couche de fibres de renforcement est enroulée à un angle dont la mesure est comprise entre 45° et 70°, et le rayon de courbure minimal de l'arbre de torsion souple (12) est compris entre 30 cm et 200 cm, de préférence entre 50 cm et 100 cm, dans lequel le couple nominal M est compris dans une fourchette de 2 Nm à 30 Nm.

2. Agencement (10) conformément à la revendication 1, **caractérisé en ce que** le tube enveloppant (14) est en polyamide.

3. Dispositif pour le nettoyage de conduits de conditionnement d'air, ledit dispositif comprenant des moyens d'enroulement (34, 34.1) pour un arbre de torsion souple (12) équipé d'un tube enveloppant (14), une machinerie de moteur d'entraînement (33) pour faire tourner l'arbre de torsion souple (12), et un dispositif à brosse (32) fixé à l'extrémité libre de l'arbre de torsion souple (12), **caractérisé en ce que** l'arbre de torsion souple (12) et le tube enveloppant (14) constituent l'agencement conformément à la revendication 1 ou 2.

Fig. 1

Fig. 3

Fig. 2

Fig. 4

18'

11

16

16'

17

65°

70°

75°

78°

17'

16''

16'''

**Fig. 5**

16'
16''
16'''
16
18'

**Fig. 6**

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 94221
- FI 108408
- WO 9567 A
- US 2573361 A
- FI 9567 U